# EUROPÄISCHE PATENTSCHRIFT

(11) **EP 0 756 616 B1**
(45) Veröffentlichungstag und Bekanntmachung des Hinweises auf die Patenterteilung: **15.07.1998**
(21) Anmeldenummer: 95911313.5
(22) Anmeldetag: 08.03.1995
(51) Int. Cl.: C10G 73/40, C09J 191/06, C09D 191/06, B01F 17/00, C10M 109/00, C08J 3/28, C08L 91/06

(54) **WACHS ERHÄLTLICH DURCH NIEDERTEMPERATUR-PLASMABEHANDLUNG, VERFAHREN ZU SEINER HERSTELLUNG UND VERWENDUNGEN**
WAX OBTAINED BY LOW-TEMPERATURE PLASMA TREATMENT, METHOD OF PREPARING THE SAME, AND USES THEREOF
CIRE OBTENUE PAR TRAITEMENT AU PLASMA A BASSE TEMPERATURE, SON PROCEDE DE FABRICATION ET SES APPLICATIONS

(30) Priorität: 21.04.1994 DE 4416070
(43) Veröffentlichungstag der Anmeldung: 05.02.1997
(73) Patentinhaber: ARPLAS Gesellschaft für Plasmatechnologie mbH, 06369 Weissandt-Gölzau (DE)
(72) Erfinder: BERGER, Steffen, D-40625 Düsseldorf (DE)
(74) Vertreter: Schneider, Henry
(86) Internationale Anmeldenummer: EP9500860
(87) Internationale Veröffentlichungsnummer: WO9529213

(56) Entgegenhaltungen:
- EP-A- 0 177 364
- WO-A-95/03344
- DE-A- 4 141 805
- DE-A- 4 330 508
- US-A- 2 904 482
- US-A- 5 234 723

## Beschreibung

Wachse sind bekannt. Als Wachse werden im Sinne der Erfindung organische Stoffe bezeichnet, die in der Regel bei ca. 20 °C knetbar, fest bis brüchig hart, durchscheinend, opak und/oder polierbar sind und die über 40 °C in eine relativ niedrigviskose Schmelze übergehen. Wachse können beispielsweise tierische Wachse, zum Beispiel Bienenwachs, pflanzliche Wachse, die überwiegend aus Estern höherer Fettsäuren, beispielsweise Palmitinsäure mit höheren Alkoholen, zum Beispiel Cetylalkohol, Myricylalkohol bestehen, natürlich vorkommende Erdwachse, Paraffin-Wachse (feste Alkane), Polyolefin-Wachse, Montan-Wachse (Ester der Montansäure), weitere synthetische Wachse, beispielsweise Ester, die sich beispielsweise von Polyethylen, chlorierten Kohlenwasserstoffen und anderen ableiten und andere natürliche Wachse, beispielsweise Ester höherer einwertiger Alkanole mit höheren einwertigen Carbonsäuren.

Es ist bekannt, diese Wachse beispielsweise zur Beschichtung und Imprägnierung verschiedener Materialien, zum Beispiel Papier, Holz, Leder usw., und zur Herstellung vorrangig wäßriger, umweltfreundlicher Lacksysteme, für elektrische Isolierungen usw. einzusetzen. Bei einer Reihe dieser Anwendungen werden die Wachse in Form von Dispersionen, Emulsionen und Lösungen verarbeitet, so daß die Dispergierbarkeit, Emulgierbarkeit und Löslichkeit der Wachse eine sehr wichtige Verarbeitungskenngröße ist.

Die Wachse finden weiterhin Verwendung als Hilfsmittel in der Kunststoffverarbeitung oder werden als Ausgangsstoffe zur Herstellung von Tensiden, Weichmachern, Seifen und Waschmitteln eingesetzt. Hierbei ist bekannt, daß für bestimmte der beispielhaft genannten Anwendungsgebiete lediglich Spezialwachse eingesetzt werden können, die entweder durch eine chemische Modifizierung der genannten Wachse oder durch eine aufwendige und damit teure Spezialsynthese hergestellt werden müssen. Hierbei ist nachteilig, daß bei den bekannten Verfahren zur chemischen Modifizierung beziehungsweise Spezialsynthesen in Abhängigkeit vom eingesetzten Wachstyp und vom gewünschten Anwendungsgebiet unterschiedliche Verfahren zur Modifizierung beziehungsweise Synthese angewendet werden müssen. Somit ist für die Herstellung bestimmter auf einen konkreten Einsatzzweck ausgerichteter Wachse jeweils eine separate Anlagentechnik notwendig, die zu einer erheblichen Verteuerung der erzielten Spezialwachse beiträgt.

Weiterhin besteht ein wesentlicher Nachteil einer Reihe der bekannten Modifizierungsverfahren darin, daß oft giftige und/oder aggressive Ausgangsstoffe, beispielsweise SO₂ und Cl₂ bei der Sulfochlorierung, HNO₃ bei der Nitrierung, benötigt werden und/oder giftige und aggressive Reakticnsprodukte, beispielsweise HCl bei der Sulfochlorierung, entstehen. Somit ist neben der aufwendigen Herstellung ein umfänglicher Schutzmechanismus zum Schutz der Umwelt vor den giftigen und/oder aggressiven Stoffen notwendig.

Aus der EP-A-0 177 364 ist ein Verfahren zur Herstellung einer wasserabstoßenden Folie bekannt, bei dem ein Substratgewebe mit einem wasserabstoßenden Mittel, beispielsweise Wachs, behandelt wird und das mit dem wasserabstoßenden Mittel behandelte Substratgewebe anschließend mit einer Polymerschicht versehen wird. Vor Bildung der Polymerbeschichtung wird das beispielsweise als Wachs ausgebildete wasserabstoßende Mittel nach Aufbringen auf dem Substrat (Träger) einem Niedrigtemperaturplasma oder einer Lichtbogenentladung ausgesetzt. Durch diese Oberflächenbehandlung des auf dem Träger aufgebrachten Wachses mittels eines Niedrigtemperaturplasmas soll die Haftung des Wachses verbessert werden.

Der Erfindung liegt daher die Aufgabe zugrunde, ein Wachs zu schaffen, das einfach und kostengünstig herstellbar ist und dessen Eigenschaften in einfacher, variabel anpassungsfähiger, kostengünstiger und umweltfreundlicher Art und Weise chemisch modifiziert werden können.

Erfindungsgemäß wird diese Aufgabe dadurch gelöst, daß unbehandelte Wachse in Granulat- oder Pulverform einer Niedertemperatur-Plasmabehandlung in einem Frequenzbereich von 10 kHz bis 10 GHz, und Anwesenheit einer Prozeßgasatmosphäre, die den Einbau polarer sauerstoff- und/oder stickstoffhaltiger Gruppen unter Beibehaltung der chemischen Grundstruktur des Wachses gestatten, unterzogen werden. Unter Niedertemperatur-Plasmabehandlung wird hier verstanden, daß das zu behandelnde Material selbst nicht über einen bestimmten Temperaturbereich, beispielsweise 40 °C bis 60 °C, hinaus erwärmt wird. Es wurde überraschenderweise gefunden, daß die so behandelten Wachse eine erhöhte Benetzbarkeit, eine verbesserte Dispergierbarkeit, Emulgierbarkeit und Löslichkeit sowie eine verbesserte Reaktionsfähigkeit gegenüber unterschiedlichsten Materialien aufweisen. Hierdurch können einerseits die erfindungsgemäßen Wachse bei den bekannten Anwendungsmöglichkeiten eingesetzt werden, ohne daß für jede einzelne Anwendungsmöglichkeit eine spezielle, nur auf diese ausgerichtete Modifizierung zu Spezialwachsen beziehungsweise Spezialsynthesen notwendig sind. Durch ein und dieselbe Behandlung der Wachse können lediglich durch Variation der während der Niedertemperatur-Plasmabehandlung vorhandenen Prozeßparameter die Wachse optimal auf unterschiedliche Anwendungsgebiete, das heißt, auf die von den Wachsen auf diesen Anwendungsgebieten geforderten chemischen Eigenschaften abgestimmt werden. Darüber hinaus ergeben sich durch die überraschend einfach mögliche chemische Modifizierung der Wachse vollkommen neue Anwendungsgebiete, beispielsweise als Dispergiermittel für Pigmentkonzentrate, Beschichtungshotmelts, Schmelzkleber oder Verträglichkeitsvermittler für Compounds.

Durch die Niedertemperatur-Plasmabehandlung der unbehandelten granulat- und/oder pulverförmigen Wachse werden diesen bestimmte Funktionen aufgeprägt. Als Funktionsquellen dienen hierbei einerseits die Plasmabehandlung und die gleichzeitige Anwesenheit einer Prozeßgasatmosphäre, die den vorgesehenen Einbau der funktionellen Gruppen, nämlich der polaren sauerstoff- und/oder stickstoffhaltigen, unter Beibehaltung der chemischen Grundstruktur gestatten.

Besonders bevorzugt wird ein Wachs, in das durch die Niedertemperatur-Plasmabehandlung, beispielsweise durch eine Auswahl einer auf das unbehandelte Wachs, beispielsweise die Art des Wachses, eine Teilchengröße, eine Teilchenoberfläche und den geplanten Verwendungszweck des behandelten Produktes einer Zusammensetzung des Prozeßgases während der Niedertemperatur-Plasmabehandlung, wobei hier unter Prozeßgas ein eingesetztes Inertgas, ein eingesetztes Inertgasgemisch, ein Reaktionsgas, ein Reaktionsgasgemisch verstanden wird, in die Wachse die für die jeweilige Anwendung erforderlichen polaren Gruppen, beispielsweise Carbonyl-, Hydroxyl-, Carboxyl- und Aminogruppen eingebaut werden.

Ein besonders bevorzugtes Wachs wird erhalten, wenn die Niedertemperatur-Plasmabehandlung der unbehandelten Wachse mit wechselnden Frequenzen, vorzugsweise mit Kombinationen verschieden hoher, wechselnder Frequenzen, durchgeführt wird. Hierbei kann sehr vorteilhaft unter gleichzeitiger Behandlung mit einem Reaktionsgasplasma und/oder einem Reaktionsgasgemischplasma auf eine unterschiedliche chemische Modifizierung der unbehandelten Wachse abgestellt werden, wobei eine Abstimmung der Frequenzen, des Inertgases, des Reaktionsgases, des Ausgangsmaterials und des gewünschten Verwendungszweckes der behandelten Wachse optimal erfolgen kann.

Es hat sich gezeigt, daß durch das gefundene Verfahren der Anteil an erforderlichen polaren Gruppen entscheidend erhöht und kombiniert werden kann und sich somit ein wesentlicher, vollkommen überraschender Qualitätssprung beim Einsatz der erfindungsgemäß behandelten Wachse einstellt.

Weitere vorteilhafte Ausgestaltungen der Erfindung ergeben sich aus den übrigen in den Unteransprüchen angegebenen Merkmalen.

Die Erfindung wird nachfolgend in einem Ausführungsbeispiel anhand der zugehörigen Zeichnung, die einen Verfahrensablauf zur Herstellung eines Wachses in einem Flußdiagramm zeigt, näher erläutert.

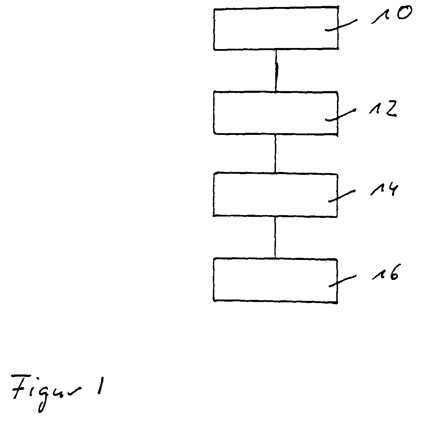

In der Figur soll das Verfahren mit Hilfe des Diagramms verdeutlicht werden. In einem ersten Verfahrensschritt 10 werden die als Ausgangsmaterialien zur Verfügung stehenden unbehandelten Wachse vorbereitet. Die unbehandelten Wachse werden hier beispielsweise in eine Pulver- und/oder Granulatform, beispielsweise eine Griesform, gebracht. Als Ausgangsmaterial können sämtliche bekannten Wachse dienen, von denen eingangs einige beispielhaft genannt sind.

In einem nächsten Verfahrensschritt 12 wird das vorbereitete Ausgangsmaterial in eine Prozeßkammer gegeben. Die Prozeßkammer kann dabei beispielsweise eine Drehtrommel eines an sich bekannten Plasmaofens zur Durchführung einer Niedertemperatur-Plasmabehandlung sein.

In einem nächsten Verfahrensschritt 14 werden die für die Behandlung des Ausgangsmaterials gewünschten Prozeßparameter und Prozeßgase eingestellt. Hierbei werden insbesondere die speziellen Kombinationen der Prozeßgase, das heißt, beispielsweise eine erste Behandlung mit einem Inertgasplasma, vorzugsweise mit Helium und/oder Argon, und die nachfolgende Behandlung mit einem Reaktionsgasplasma, vorzugsweise mit Sauerstoff und/oder Stickstoff, oder auch die Behandlung mit einem Plasma, das aus einem Gemisch der vorgenannten Gase erzeugt wird, festgelegt. Weiterhin erfolgt die Einstellung der zur Plasmaerzeugung im Vakuum notwendigen Hochfrequenzen und deren zeitlicher Abfolge. So sind Varianten denkbar, in der erst mit einer niederen Frequenz, beispielsweise 13,56 MHz, und anschließend mit einer höheren Frequenz, beispielsweise 2,45 GHz, eine Plasmabehandlung durchgeführt wird. Darüber hinaus ist eine alternierende Zuschaltung der Frequenzen denkbar. Selbstverständlich können auch andere Frequenzen in beliebiger, frei wählbarer Reihenfolge zur Durchführung der Plasmabehandlung eingestellt werden. Im übrigen wird die gewünschte Drehzahl der Drehtrommel, beispielsweise im Bereich zwischen 4 und 20 Umdrehungen/pro Minute, sowie der gewünschte Prozeßdruck, der beispielsweise im Bereich zwischen 0,3 mbar und 1 mbar liegt, eingestellt. Während der Plasmabehandlung kann der Prozeßdruck verfahrensbedingt Schwankungen unterliegen. Weiterhin wird die Behandlungsdauer festgelegt, mit der die Behandlung des Ausgangsmaterials erfolgt. Diese beträgt beispielsweise zwischen 15 und 600 Sekunden. Die genannten Prozeßparameter beziehungsweise Prozeßgase können untereinander in beliebiger Zusammenstellung variiert werden und sind insbesondere auf die Zusammensetzung des jeweiligen konkret vorliegenden Ausgangsmaterials, also des unbehandelten Wachses, sowie auf den gewünschten Verwendungszweck des Endproduktes abgestimmt.

In einem nächsten Verfahrensschritt 16 erfolgt dann die Plasmabehandlung des Ausgangsmaterials mit den in dem Schritt 14 eingestellten Prozeßparametern beziehungsweise Prozeßbedingungen. Hierbei ist ebenfalls denkbar, daß während der Plasmabehandlung in dem Schritt 16 eine Veränderung und/oder Anpassung der Prozeßparameter, beispielsweise durch eine Regelung, erfolgen kann.

Mit den erfindungsgemäßen Wachsen ist jede denkbare, den Einsatz eines Wachses erfordernde, Anwendung möglich. Dies kann beispielsweise die Herstellung von Dispersionen, Emulsionen und Lösungen zum Beschichten und/oder Imprägnieren von beliebigen Materialien sein. Weiterhin ist der Einsatz als Beschichtungshotmelt, Polymeradditiv, Dispergiermittel, Verträglichkeitsvermittler für Compounds, Schmelzkleber, Hilfsmittel in der Kunststoffverarbeitung, Tensid, Trennmittel, Gleitmittel sowie als Bestandteil bei der Herstellung der genannten Anwendungen, der Herstellung von Lackdispersion, der Herstellung von Seifen, der Herstellung von Waschmitteln und der Herstellung von Schlichtemitteln für Glas- und Kohlenstoff-Fasern möglich.

In einem konkreten Beispiel wird in die Drehtrommel einer an sich bekannten Niedertemperatur-Plasmaanlage als Ausgangsstoff ein Polyethylen-Wachs, beispielsweise LE-Wachs 112, in Griesform eingefüllt. Als Prozeßparameter wird eine Prozeßdruck von 0,8 mbar bei einer Umdrehungsgeschwindigkeit von acht Umdrehungen pro Minute der Drehtrommel eingestellt. Die Leistung des Mikrowellengenerators beträgt 250 Watt und die der Hochfrequenzeinspeisung ebenfalls 250 Watt. Die Niedertemperatur-Plasmabehandlung wird bei einem Argonplasma für 15 Sekunden unter der Hochfrequenz und für 15 Sekunden unter der Mikrowellenfrequenz, einem Sauerstoffplasma für 60 Sekunden unter der Hochfrequenz und 60 Sekunden unter der Mikrowellenfrequenz und einem Stickstoffplasma für 30 Sekunden unter der Hochfrequenz und 30 Sekunden unter der Mikrowellenfrequenz durchgeführt. Der Mikrowellengenerator erzeugt dabei eine Frequenz von 2,45 GHz und die Hochfrequenzeinspeisung eine Frequenz von 13,56 MHz. Nach Beendigung der Behandlung des Ausgangsmaterials wird ein Wachs erzielt, aus dem bei Raumtemperatur eine wäßrige Dispersion hergestellt werden kann, während mit dem als Ausgangsmaterial dienenden LE-Wachs 112 bei Raumtemperatur keine wäßrige Dispersion herstellbar ist.

## Patentansprüche

1. Wachs mit in die chemische Grundstruktur eingebauten polaren, sauerstoff- und/oder stickstoffhaltigen Gruppen, erhältlich durch eine Niedertemperatur-Plasmabehandlung von unbehandelten granulat- oder pulverförmigen Wachsen, in einem Frequenzbereich von 10 kHz bis 10 GHz, und der Anwesenheit einer Prozeßgasatmosphäre, die den Einbau polarer sauerstoff- und/oder stickstoffhaltiger Gruppen unter Beibehaltung der chemischen Grundstruktur des Wachses gestatten.

2. Verfahren zur Herstellung von Wachsen nach Anspruch 1, **dadurch gekennzeichnet**, daß unbehandelte Wachse in Granulat- oder Pulverform einer Niedertemperatur-Plasmabehandlung in einem Frequenzbereich von 10 kHz bis 10 GHz, und Anwesenheit einer Prozeßgasatmosphäre, die den Einbau polarer sauerstoff- und/oder stickstoffhaltiger Gruppen unter Beibehaltung der chemischen Grundstruktur des Wachses gestatten, unterzogen werden.

3. Verfahren nach Anspruch 2, **dadurch gekennzeichnet**, daß die Plasmabehandlung in einem Frequenzbereich von 13,56 MHz bis 2,45 GHz durchgeführt wird.

4. Verfahren nach Anspruch 1, **dadurch gekennzeichnet**, daß die Plasmabehandlung mit wechselnden Frequenzen durchgeführt wird.

5. Verfahren nach einem der vorhergehenden Ansprüche, **dadurch gekennzeichnet**, daß die Plasmabehandlung mit Kombinationen verschieden hoher, wechselnder Frequenzen durchgeführt wird.

6. Verfahren nach einem der vorhergehenden Ansprüche, **dadurch gekennzeichnet**, daß als unbehandelte Wachse Paraffin-Wachse, Polyolefin-Wachse, Montan-Wachse und andere natürliche Wachse eingesetzt werden.

7. Verfahren nach einem der vorhergehenden Ansprüche, **dadurch gekennzeichnet**, daß die Plasmabehandlung unter Zufuhr eines Inertgases, beispielsweise Helium und/oder Argon, durchgeführt wird.

8. Verfahren nach einem der vorhergehenden Ansprüche, **dadurch gekennzeichnet**, daß die Plasmabehandlung unter Zufuhr eines Reaktionsgases, beispielsweise Sauerstoff und/oder Stickstoff, durchgeführt wird.

9. Verfahren nach einem der vorhergehenden Ansprüche, **dadurch gekennzeichnet**, daß die Plasmabehandlung nacheinander mit wenigstens einem Inertgasplasma und wenigstens einem Reaktionsgasplasma oder wenigstens einem Reaktionsgasgemischplasma oder unter Zufuhr eines Gemisches aus wenigstens einem Inertgas und wenigstens einem Reaktionsgas durchgeführt wird.

10. Verfahren nach einem der vorhergehenden Ansprüche, **dadurch gekennzeichnet**, daß die Plasmabehandlung bei einem Prozeßdruck von 0,1 mbar bis 2 mbar, vorzugsweise 0,3 mbar bis 1 mbar, erfolgt.

11. Verfahren nach einem der vorhergehenden Ansprüche, **dadurch gekennzeichnet**, daß die Dauer der Plasmabehandlung 5 s bis 800 s, vorzugsweise 15 s bis 600 s, beträgt.

12. Verfahren nach einem der vorhergehenden Ansprüche, **dadurch gekennzeichnet**, daß die unbehandelten Wachse während der Plasmabehandlung bewegt werden.

13. Verfahren nach Anspruch 12, **dadurch gekennzeichnet**, daß die Wachse in einer Drehtrommel, vorzugsweise mit 4 bis 20 Umdrehungen pro Minute, umgewälzt werden.

14. Verwendung eines nach den Ansprüchen 2 bis 13 behandelten Wachses zur Herstellung von Dispersionen, Emulsionen und Lösungen zum Beschichten und/oder Imprägnieren von Materialien.

15. Verwendung eines nach den Ansprüchen 2 bis 13 behandelten Wachses zum Beschichten und/oder Imprägnieren von Materialien aus der Schmelze.

16. Verwendung eines nach den Ansprüchen 2 bis 13 behandelten Wachses als Beschichtungshotmelt.

17. Verwendung eines nach den Ansprüchen 2 bis 13 behandelten Wachses als Polymeradditiv.

18. Verwendung eines nach den Ansprüchen 2 bis 13 behandelten Wachses als Dispergiermittel (zum Beispiel für Pigmentkonzentrate.

19. Verwendung eines nach den Ansprüchen 2 bis 13 behandelten Wachses als Verträglichkeitsvermittler für Compounds.

20. Verwendung eines nach den Ansprüchen 2 bis 13 behandelten Wachses als Schmelzkleber.

21. Verwendung eines nach den Ansprüchen 2 bis 13 behandelten Wachses als Tensid.

22. Verwendung eines nach den Ansprüchen 2 bis 13 behandelten Wachses als Trennmittel.

23. Verwendung eines nach den Ansprüchen 2 bis 13 behandelten Wachses als Gleitmittel.

24. Verwendung eines nach den Ansprüchen 2 bis 13 behandelten Wachses zur Herstellung von Beschichtungshotmelts.

25. Verwendung eines nach den Ansprüchen 2 bis 13 behandelten Wachses zur Herstellung von Polymeradditiven.

26. Verwendung eines nach den Ansprüchen 2 bis 13 behandelten Wachses zur Herstellung von Dispergiermitteln.

27. Verwendung eines nach den Ansprüchen 2 bis 13 behandelten Wachses zur Herstellung von Verträglichkeitsvermittlern für Compounds.

28. Verwendung eines nach den Ansprüchen 2 bis 13 behandelten Wachses zur Herstellung von Schmelzklebern.

29. Verwendung eines nach den Ansprüchen 2 bis 13 behandelten Wachses zur Herstellung von Tensiden.

30. Verwendung eines nach den Ansprüchen 2 bis 13 behandelten Wachses zur Herstellung von Trennmitteln.

31. Verwendung eines nach den Ansprüchen 2 bis 13 behandelten Wachses zur Herstellung von Gleitmitteln.

32. Verwendung eines nach den Ansprüchen 2 bis 13 behandelten Wachses zur Herstellung von Lackdispersionen.

33. Verwendung eines nach den Ansprüchen 2 bis 13 behandelten Wachses zur Herstellung von Seifen.

34. Verwendung eines nach den Ansprüchen 2 bis 13 behandelten Wachses zur Herstellung von Waschmitteln.

35. Verwendung eines nach den Ansprüchen 2 bis 13 behandelten Wachses zur Herstellung von Schlichtemitteln für Glas- und Kohlenstoff-Fasern.

## Claims

1. A wax with polar oxygen and/or nitrogen containing groups incorporated into the chemical basic structure, this wax obtainable through low-temperature plasma-treatment of untreated granular or pulverulent waxes in a frequency range of 10 kHz to 10 GHz and in the presence of a process gas atmosphere, the frequency range and the process gas atmosphere allowing incorporation of polar oxygen and/or nitrogen containing groups while the chemical basic structure of the wax is retained.

2. A method of manufacturing waxes in accordance with Claim 1, characterised in that untreated waxes in granulate form or powder form are subjected to low-temperature plasma-treatment in a frequency range of 10 kHz to 10 GHz and in the presence of a process gas atmosphere, the frequency range and the process gas atmosphere allowing incorporation of polar oxygen and/or nitrogen containing groups while the chemical basic structure of the wax is retained.

3. A method in accordance with Claim 2, characterised in that the plasma treatment is carried out in a frequency range of 13.56 MHz to 2.45 GHz.

4. A method in accordance with Claim 1, characterised in that the plasma treatment is carried out using varying frequencies.

5. A method in accordance with any one of the preceding Claims, characterised in that the plasma treatment is carried out using combinations of varying frequencies of differing level.

6. A method in accordance with any one of the preceding Claims, characterised in that paraffin waxes, polyolefin waxes, montan waxes and other natural waxes are used as untreated waxes.

7. A method in accordance with any one of the preceding Claims, characterised in that the plasma treatment is carried out accompanied by the supplying of an inert gas, for example helium and/or argon.

8. A method in accordance with any one of the preceding Claims, characterised in that the plasma treatment is carried out accompanied by the supplying of a reaction gas, for example oxygen and/or nitrogen.

9. A method in accordance with any one of the preceding Claims, characterised in that the plasma treatment is carried out successively with at least one inert gas plasma and at least one reaction gas plasma or at least one reaction gas mixture plasma or is carried out accompanied by the supplying of a mixture of at least one inert gas and at least one reaction gas.

10. A method in accordance with any one of the preceding Claims, characterised in that the plasma treatment takes place at a process pressure of 0.1 mbar to 2 mbar, preferably 0.3 mbar to 1 mbar.

11. A method in accordance with any one of the preceding Claims, characterised in that the duration of the plasma treatment is 5 s to 800 s, preferably 15 s to 600 s.

12. A method in accordance with any one of the preceding Claims, characterised in that the untreated waxes are agitated during the plasma treatment.

13. A method in accordance with Claim 12, characterised in that the waxes are circulated in a rotary drum, preferably at 4 to 20 revolutions per minute.

14. Utilisation of a wax treated in accordance with Claims 2 to 13 for manufacturing dispersions, emulsions and solutions for coating and/or impregnating materials.

15. Utilisation of a wax treated in accordance with Claims 2 to 13 for coating and/or impregnating materials from the melt.

16. Utilisation of a wax treated in accordance with Claims 2 to 13 as a coating hot melt.

17. Utilisation of a wax treated in accordance with Claims 2 to 13 as a polymer additive.

18. Utilisation of a wax treated in accordance with Claims 2 to 13 as a dispersing agent, for example for pigment concentrates.

19. Utilisation of a wax treated in accordance with Claims 2 to 13 as a compatibility mediator for compounds.

20. Utilisation of a wax treated in accordance with Claims 2 to 13 as a hot-melt adhesive.

21. Utilisation of a wax treated in accordance with Claims 2 to 13 as a surfactant.

22. Utilisation of a wax treated in accordance with Claims 2 to 13 as a parting agent.

23. Utilisation of a wax treated in accordance with Claims 2 to 13 as a lubricating agent.

24. Utilisation of a wax treated in accordance with Claims 2 to 13 for manufacturing coating hot melts.

25. Utilisation of a wax treated in accordance with Claims 2 to 13 for manufacturing polymer additives.

26. Utilisation of a wax treated in accordance with Claims 2 to 13 for manufacturing dispersing agents.

27. Utilisation of a wax treated in accordance with Claims 2 to 13 for manufacturing compatibility mediators for compounds.

28. Utilisation of a wax treated in accordance with Claims 2 to 13 for manufacturing hot-melt adhesives.

29. Utilisation of a wax treated in accordance with Claims 2 to 13 for manufacturing surfactants.

30. Utilisation of a wax treated in accordance with Claims 2 to 13 for manufacturing parting agents.

31. Utilisation of a wax treated in accordance with Claims 2 to 13 for manufacturing lubricating agents.

32. Utilisation of a wax treated in accordance with Claims 2 to 13 for manufacturing lacquer and varnish dispersions.

33. Utilisation of a wax treated in accordance with Claims 2 to 13 for manufacturing soaps.

34. Utilisation of a wax treated in accordance with Claims 2 to 13 for manufacturing washing agents.

35. Utilisation of a wax treated in accordance with Claims 2 to 13 for manufacturing sizing agents for glass fibres and carbon fibres.

## Revendications

1. Cire dans la structure chimique de base de laquelle sont intégrés des groupes polaires contenant de l'oxygène et/ou de l'azote, obtenue par traitement au plasma à basse température de cires brutes sous forme de granulés ou de poudre, dans une plage de fréquences de 10 kHz à 10 GHz et dans une atmosphère de gaz de traitement permettant d'inclure des groupes polaires contenant de l'oxygène et/ou de l'azote, tout en conservant la structure chimique de base de la cire.

2. Procédé pour fabriquer des cires selon la revendication 1, caractérisé en ce que des cires brutes sous forme de granulés ou de poudre sont soumises à un traitement au plasma à basse température, dans une plage de fréquences de 10 kHz à 10 GHz et dans une atmosphère de gaz de traitement permettant d'inclure des groupes polaires contenant de l'oxygène et/ou de l'azote, tout en conservant la structure chimique de base de la cire.

3. Procédé selon la revendication 2, caractérisé en ce que le traitement au plasma est réalisé dans une plage de fréquences comprise entre 13,56 MHz et 2,45 GHz.

4. Procédé selon la revendication 1, caractérisé en ce que le traitement au plasma est réalisé avec des fréquences variables.

5. Procédé selon l'une des revendications précédentes, caractérisé en ce que le traitement au plasma est effectué avec des combinaisons de diverses fréquences hautes et variables.

6. Procédé selon l'une des revendications précédentes, caractérisé en ce qu'on utilise en tant que cires brutes des cires de paraffine, des cires polyoléfiniques, des cires de lignite et d'autres cires naturelles.

7. Procédé selon l'une des revendications précédentes, caractérisé en ce que le traitement au plasma est réalisé avec adjonction d'un gaz inerte, par exemple de l'hélium et/ou de l'argon.

8. Procédé selon l'une des revendications précédentes, caractérisé en ce que le traitement au plasma est réalisé avec adjonction d'un gaz réactif, par exemple de l'oxygène et/ou de l'azote.

9. Procédé selon l'une des revendications précédentes, caractérisé en ce que le traitement au plasma est effectué successivement avec au moins un plasma à gaz inerte et au moins un plasma à gaz réactif, ou au moins un plasma formé par un mélange de gaz réactifs ou avec adjonction d'un mélange composé d'au moins un gaz inerte et un gaz réactif.

10. Procédé selon l'une des revendications précédentes, caractérisé en ce que le traitement au plasma est réalisé sous une pression de traitement comprise entre 0,1 mbar et 2 mbars, de préférence entre 0,3 mbar et 1 mbar.

11. Procédé selon l'une des revendications précédentes, caractérisé en ce que le traitement au plasma dure entre 5 s et 800 s, de préférence entre 15 s et 600 s.

12. Procédé selon l'une des revendications précédentes, caractérisé en ce que les cires brutes sont remuées pendant le traitement au plasma.

13. Procédé selon la revendication 12, caractérisé en ce que les cires sont brassées dans un tambour rotatif effectuant de préférence 4 à 20 rotations par minute.

14. Utilisation d'une cire traitée conformément aux revendications 2 à 13, en vue de fabriquer des dispersions, des émulsions et des solutions pour recouvrir et/ou imprégner des matériaux.

15. Utilisation d'une cire traitée conformément aux revendications 2 à 13, pour recouvrir et/ou imprégner des matériaux issus de la masse fondue.

16. Utilisation d'une cire traitée conformément aux revendications 2 à 13 en tant que masse d'enduction sous fusion.

17. Utilisation d'une cire traitée conformément aux revendications 2 à 13 en tant qu'additif pour polymères.

18. Utilisation d'une cire traitée conformément aux revendications 2 à 13 en tant qu'agent dispersant (par exemple pour des concentrés de pigments).

19. Utilisation d'une cire traitée conformément aux revendications 2 à 13 en tant qu'agent de compatibilité pour composites.

20. Utilisation d'une cire traitée conformément aux revendications 2 à 13 en tant que colle thermofusible.

21. Utilisation d'une cire traitée conformément aux revendications 2 à 13 en tant qu'agent tensioactif.

22. Utilisation d'une cire traitée conformément aux revendications 2 à 13 en tant qu'agent de démoulage.

23. Utilisation d'une cire traitée conformément aux revendications 2 à 13 en tant que lubrifiant.

24. Utilisation d'une cire traitée conformément aux revendications 2 à 13 pour fabriquer des masses d'enduction sous fusion.

25. Utilisation d'une cire traitée conformément aux revendications 2 à 13 pour fabriquer des additifs pour polymères.

26. Utilisation d'une cire traitée conformément aux revendications 2 à 13 pour fabriquer des agents dispersants.

27. Utilisation d'une cire traitée conformément aux revendications 2 à 13 pour fabriquer des agents de compatibilité pour composites.

28. Utilisation d'une cire traitée conformément aux revendications 2 à 13 pour fabriquer des colles thermofusibles.

29. Utilisation d'une cire traitée conformément aux revendications 2 à 13 pour fabriquer des agents tensioactifs.

30. Utilisation d'une cire traitée conformément aux revendications 2 à 13 pour fabriquer des agents de démoulage.

31. Utilisation d'une cire traitée conformément aux revendications 2 à 13 pour fabriquer des lubrifiants.

32. Utilisation d'une cire traitée conformément aux revendications 2 à 13 pour fabriquer des dispersions de peinture.

33. Utilisation d'une cire traitée conformément aux revendications 2 à 13 pour fabriquer des savons.

34. Utilisation d'une cire traitée conformément aux revendications 2 à 13 pour fabriquer des détergents.

35. Utilisation d'une cire traitée conformément aux revendications 2 à 13 pour fabriquer des apprêts pour fibres de verre et fibres de carbone.
